# EUROPÄISCHE PATENTSCHRIFT

(11) **EP 0 529 267 B1**
(45) Veröffentlichungstag und Bekanntmachung des Hinweises auf die Patenterteilung: **16.06.1999**
(21) Anmeldenummer: 92111854.3
(22) Anmeldetag: 09.09.1992
(51) Int. Cl.: H04Q 1/14, H01R 9/24

(54) **Anschlussleiste für die Fernmelde- und Datentechnik**
Terminal block for telecommunications and data systems engineering
Bloc de connexion pour technique des télécommunications et des données

(43) Veröffentlichungstag der Anmeldung: 03.03.1993
(73) Patentinhaber: KRONE Aktiengesellschaft, 14167 Berlin (DE)
(72) Erfinder: Gerke, Dieter, W-1000 Berlin 27 (DE); Bülow, Harald, W-1000 Berlin 41 (DE); Müller, Manfred, W-1000 Berlin 65 (DE)

(56) Entgegenhaltungen:
- EP-A- 0 414 043
- EP-A- 0 446 572
- DE-A- 2 147 336
- GB-A- 2 061 030

## Beschreibung

Die Erfindung bezieht sich auf eine Anschlußleiste für die Fernmelde- und Datentechnik gemäß dem Oberbegriff des Anspruches 1.

Eine Anschlußleiste der gattungsgemäßen Art ist durch die Baureihe 7 der Anmelderin bekannt geworden. Bei dieser vorbekannten Anschlußleiste wird nach dem Anschließen der ankommenden Kabeladern an die Schneidklemm-Kontaktelemente des Kabelanschaltelementes ein Rangierelement am Kabelanschaltelement angerastet, das die Reihe der Schneidklemm-Kontaktelemente abdeckt. Das Rangierelement ist mit einer weiteren Reihe von Schneidklemm-Kontaktelementen versehen, die mit den Gabelkontakten verbunden sind, welche auf die als Messerkontakte ausgebildeten Kontaktfahnen der Schneidklemm-Kontaktelemente aufsteckbar sind, die im Kabelanschaltelement untergebracht sind. Zur Verbindung der an die SchneidklemmKontaktelemente des Kabelanschaltelementes angeschlossenen ankommenden Kabeladern mit den abgehenden Kabeladern, die an einer weiteren Anschlußleiste angeschlossen sind, werden an die Schneidklemm-Kontaktelemente des Rangierelementes Rangierdrähte angeschlossen. Nachteilig hierbei ist, daß zur Verbindung der ankommenden Kabel adern mit den abgehenden Kabeladern Rangierdrähte erforderlich sind, welche darüber hinaus beim Ändern einer Anschlußverbindung von den SchneidklemmKontaktelementen des Rangierelementes gelöst und an anderen Schneidklemm-Kontaktelementen neu kontaktiert werden müssen, wobei die Rangierdrähte gekürzt werden müssen.

Aus dem Dokument EP-A-0 446 572 der gleichen Anmelderin ist eine Ansclußleiste bekannt, wobei mindestens ein Leistenkörper mit einer Drehachse versehen ist, um die der Leistenkörper aus der Anschlußleiste herausschwenkbar ist. Somit wird eine Anschlußleiste geschaffen, beider des Anschliessen und das Entfernen der Kabeladern jederzeit möglich ist, ohne daß ein Leistenkörper das Anschließen der Kabeladernanden anderen Leistenkörper behindert.

Aus dem Dokument DE-A-2 147 336 ist ein Verteilergestell mit daran befestigten Verbindungselemeten für den elektrischen Anschluss von ankommenden und abgehende Leitungen, wobei die an dem Gestell ankommenden und/oder abgehenden Leitungen, von vorzugsweise gemeinsamen Festlegestellen aus, einzeln und lose zu den Anschlusstellen der Verbindungselemente verlegt sind und ein Länge besitzen, die eine wahlweise Verlegung innerhalb eines vorbestimmten Gestellbereiches gestattet.

Der Erfindung liegt von daher die Aufgabe zugrunde, eine Anschlußleiste der gattungsgemäßen Art dahingehend zu verbessern, daß zur Verbindung ankommender Kabeladern mit abgehenden Kabeladern die Einschaltung von Rangierdrähten und ferner das Lösen von Kabeladern von Schneidklemm-Kontaktelementen vermieden sind.

Zur Lösung dieser Aufgabe sieht die Erfindung vor, daß das Anschlußelement als Steckeraufnahme mit bodenseitig offenen Kammern und in diese einsteckbaren, mit den abgehenden Kabeladern verbundenen Steckern ausgebildet ist und daß die Gabelkontakte an den Steckern angeordnet sind. Erfindungsgemäß werden die abgehenden Kabeladern unmittelbar an den Steckern angeschlossen, welche in die bodenseitig offenen Kammern der Steckeraufnahme einsteckbar sind und mit ihren Gabelkontakten mit den Kontaktfahnen der Schneidklemm-Kontaktelemente im Kabelanschlußelement kontaktieren. Die das Anschlußelement bildende Steckeraufnahme wird nach dem Anschließen der ankommenden Kabeladern an die im Kabelanschaltelement angeordneten Schneidklenm-Kontaktelenente auf das Kabelanschaltelement aufgerastet, so daß anschließend die einzelnen mit den abgehenden Kabeladern verbundenen Stecker in die bodenseitig offenen Kammern der Steckeraufnahme einsteckbar sind. Ein Umrangieren einer Leitungsverbindung erfordert somit nur ein Herausziehen des Steckers aus der Steckeraufnahme und ein Einstecken des Steckers in eine andere Kammer der Steckeraufnahme, welche einem bestimmten Paar von ankommenden-Kabeladern zugeordnet ist. Somit wird das Rangieren dadurch vereinfacht, daß keine Rangierdrähte erforderlich sind. Ferner ist es nicht mehr erforderlich, Kabeladern aus Schneidklemm-Kontaktelementen herauszulösen, um einen Anschlußverbindung zu rangieren.

In weiterer Ausbildung der Erfindung deckt die Steckeraufnahme mit einem auf der Innenseite parallel zur Reihe der Kammern angeordneten U-fömigen Kanal die Reihe von SchneidklemmKontaktelementen des Kabelanschaltelementes ab, wobei die Steckeraufnahme mit dem Kabelanschlußelement durch an der Stirnseite der Steckeraufnahme mit Rasten versehene Laschen verbunden ist. Jeder Stecker wird mit seinem Steckerfuß in eine bodenseitig offene Kammer eingesteckt, wobei am Steckerfuß eine Rastnoppe und an der Kammer eine Rastöffnung zum Einrasten des Steckers bei nur teilweise eingesteckten Steckerfuß zu bewirken. Bei vollständig in die Kammer eingestecktem Steckerfuß rastet eine, einen Bestandteil einer Wippe bildende Rastnase in eine Rastöffnung, die an einem durchgehenden Steg der Steckeraufnahme außenseitig ausgebildet ist.

Weitere vorteilhafte Ausgestaltungen der Erfindung ergeben sich aus den weiteren Unteransprüchen

Die Erfindung ist nachfolgend anhand eines in den Zeichnungen näher dargestellten Ausführungsbeispieles einer Anschlußleiste für die Fernmelde- und Datentechnik näher erläutert. Es zeigt:
- Fig. 1: die Ansicht der Anschlußleiste, bestehend aus Kabelanschaltelement, aufgerasteter Steckeraufnahme und in diese eingesteckten Steckern,
- Fig. 2: eine Draufsicht auf die Anschlußleiste gemäß Fig. 1, teilweise ohne eingesteckte Stecker,
- Fig. 3: einen Querschnitt durch die Anschlußleiste mit einem nur vorgerasteten Stecker,
- Fig. 4: einen Querschnitt durch die Anschlußleiste mit voll eingerastetem Stecker und angeschlossenem Überspannungsableitermagazin,
- Fig. 5: eine Teilansicht des Kabelanschaltelementes ohne Steckeraufnahme,
- Fig. 6: eine Teilansicht des Kabelanschaltelementes mit Steckeraufnahme,
- Fig. 7: eine Teilansicht des Kabelanschaltelementes mit Steckeraufnahme und eingestecktem Stecker,
- Fig. 8: die Seitenansicht eines Steckers,
- Fig. 9: die Vorderansicht des Steckers und
- Fig.10: die Draufsicht auf das die Gabelkontakte und Schneidklemm-Kontaktelemente aufnehmende Gehäuseteil des geöffneten Steckers.

Die Anschlußleiste für die Fernmelde- und Datentechnik besteht aus einem Kabelanschaltelement 1, einer auf dieses aufgerasteten, ein Anschlußelement bildenden Steckeraufnahme 2, einer an einer Längsseite des Kabelanschaltelementes 1 angesetzten Magazinaufnahme 3 für ein Uberspannungsableitermagazin 4 und aus einer Vielzahl von mit ihren Steckerfüßen 5 in die Steckeraufnahme 2 eingesteckten Steckern 6.

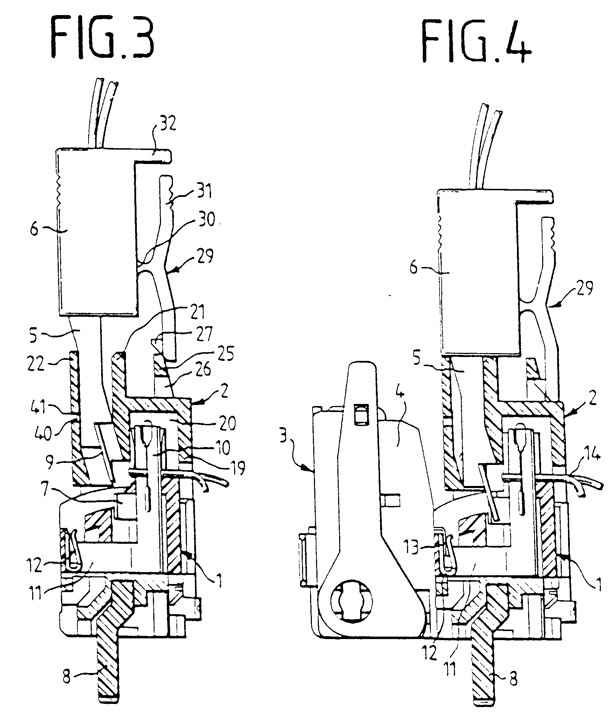

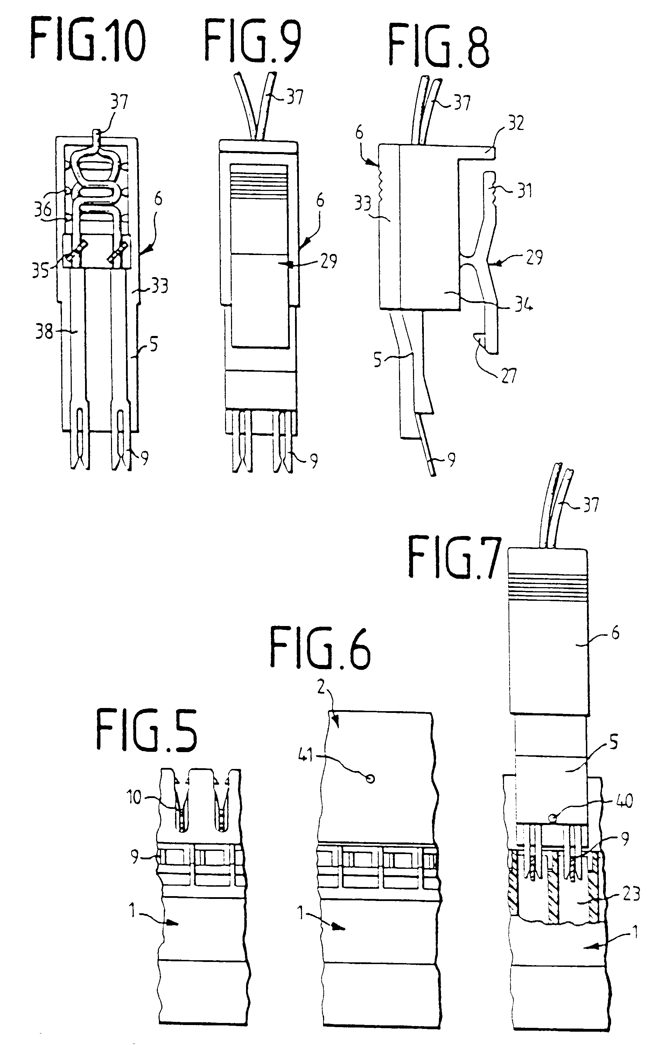

Das aus einem Kunststoffkörper gebildete Kabelanschaltelement 1, das auf seiner Unterseite einen Kabelführungsbügel 8 aufweist, besteht aus einem im Querschnitt abgestuften Kunststoffkörper, dessen in den Figuren 3 und 4 rechts dargestellter Teil höher ausgebildet ist und eine Reihe von Schneidklemm-Kontaktelementen 10 aufnimmt, die an ihrem mittleren, in den Figuren 3 und 4 nach links gerichteten Bereich mit Kontaktfahnen 7 und an ihrem unteren Ende mit Anschlußlaschen 11 verbunden sind, die an ihren freien Enden Gabelkontakte 12 tragen. In diese greifen Abgriffkontakte 13 des Überspannungsableitermagazines 4 ein. An jedes Schneidklemm-Kontaktelement 10 ist eine ankommende Kabelader 14 in lötfreier, schraubfreier und abisolierfreier Anschlußtechnik angeschlossen.

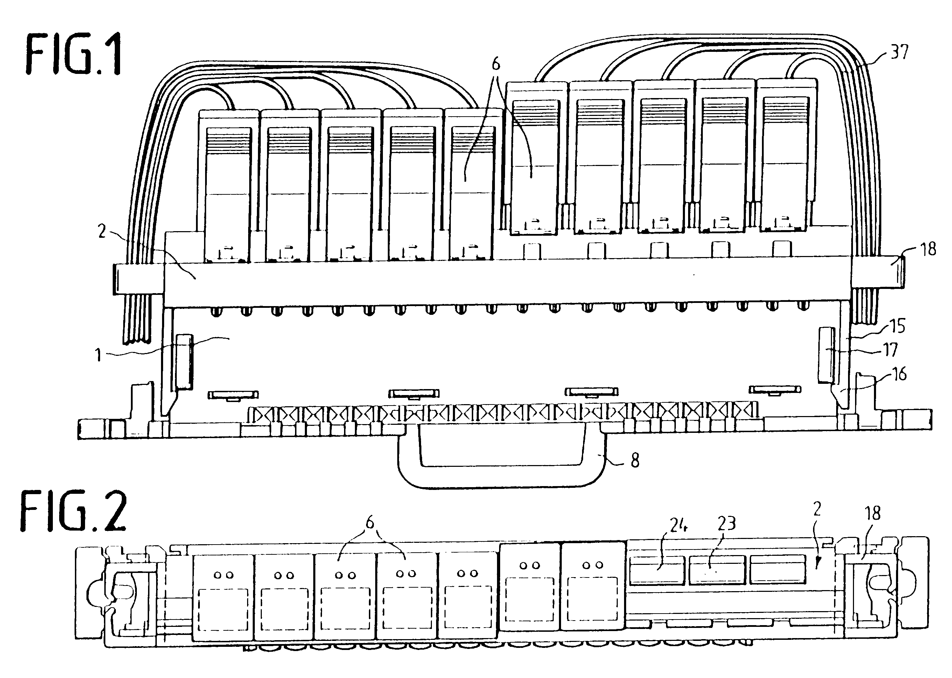

Auf das Kabelanschaltelement 1 ist die Steckeraufnahme 2 aufgerastet, wozu diese stirnseitig mit je einer Lasche 15 versehen ist, die wiederum mit nach innen gerichteten Rasten 16 versehen sind, die hinter Raststege 17 greifen, die auf den Längsseiten des Kabelanschaltelementes 1 angebracht sind. Stirnseitig trägt jede Steckeraufnahme 2 je eine Kabelführung 18, wie es in Fig. 1 dargestellt ist.

Die Steckeraufnahme 2 umfaßt einen Kunststoffkörper, der auf der in den Figuren 3 und 4 rechts dargestellten Seite zwischen seiner einen Außenwand 19 und seiner Mittelwand 21 einen U-förmigen Kanal 20 bildet, der auf den höheren Teil des Kunststoffkörpers des Kabelanschaltelementes 1 aufgesteckt ist und somit die sich im höheren Teil des Kabelanschaltelementes 1 befindlichen Schneidklemm-Kontaktelemente 10 und die an diese angeschlossenen ankommenden Kabeladern 14 sichert. Parallel dazu verläuft oberhalb der mit geringerer Bauhöhe ausgebildeten Längsseite des Kunststoffkörpers die Mittelwand 21 und die andere Außenwand 22, die zwischen sich Kammern 23 bilden, die durch Querwände 24 unterteilt sind. Die Kammern 23 sind bodenseitig offen und bilden somit Einsteckkanäle für den Steckerfuß 5 der Stecker 6, wie es in den Figuren 3 und 4 dargestellt ist. Auf der dem Kanal 20 gegenüberliegenden Außenseite der Steckeraufnahme 2 ist etwa oberhalb der einen Außenwand 19 ein durchgehender Steg 25 an der Steckeraufnahme 2 ausgebildet, der mit Rastöffnungen 26 zum Einrasten von Rastnasen 27 versehen ist, die bei in die Kammern 23 der Steckeraufnahme 2 eingesteckten Steckerfüßen 5 in die Rastöffnungen 26 des Steges 25 der Steckeraufnahme 2 eingreifen. Die Rastnasen 27 sind auf der Innenseite des einen Endes einer am Gehäuse 28 des steckers 6 angelenkten Wippe 29 angeordnet, die in der Längsmitte über einen Steg 30 mit dem Gehäuse 28 des Steckers 6 verbunden ist und am anderen Ende eine Wippentaste 31 bildet, die durch eine am Gehäuse 28 des Steckers 6 angeordnete Wand 32 vor einer ungewünschten Betätigung gesichert ist. Bei einem Druck auf die Wippentaste 31 wird die Rastnase 27 aus der Rastöffnung 26 entriegelt und der Stecker 6 kann aus der Steckeraufnahme 2 herausgezogen werden.

Das Gehäuse 28 eines jeden Steckers 6 besteht aus zwei Gehäuseteilen 33,34, die in nicht näher dargestellter Weise miteinander verrastet sind. Jeder Gehäuseteil 33,34 bildet auch einen Teil des Steckerfußes 5. In den Gehäuseteil 33 sind Schneidklemm-Kontaktelemente 35 und Klemmrippen 36 aus Kunststoff eingesetzt, die zum Anschluß bzw. zum Festlegen der an den Stecker 6 angeschlossenen abgehenden Kabeladern 37 dienen. Die Schneidklemm-Kontaktelemente 35 sind mittels elektrisch leitender metallischer Streifen 38 mit den Gabelkontakten 9 verbunden, die am freien Ende des Steckerfußes 5 aus diesem herausragen. Nach dem Einbringen der abgehenden Kabeladern 37 in die Schneidklemm-Kontaktelemente 35 durch lötfreies, schraubfreies und abisolierfreies Verbinden wird der zweite Gehäuseteil 34 aufgesetzt, welcher die Wippe 39 trägt, wie es in Fig. 8 dargestellt ist.

Jeder Steckerfuß 5 weist auf seiner Rückseite eine Rastnoppe 40 auf, und jede Kammer 20 der Steckeraufnahme 2 ist mit einer Rastöffnung 41 zum Eingreifen der Rastnoppe 40 bei nur teilweise eingestecktem Steckerfuß 5 versehen, wobei die Rastöffnung 41 in der Außenwand 22 der Steckeraufnahme 2 vorgesehen ist. Wie es die Fig. 3 zeigt, kann der Stecker 6 somit voreingesteckt werden, ohne daß eine elektrische Verbindung zwischen den ankommenden Kabeladern 14, die an den Schneidklemm-Kontaktelementen 10 im Kabelanschaltelement 1 angeschlossen sind, und den abgehenden Kabeladern 37 hergestellt wird, die an den Schneidklemm-Kontaktelementen 35 im Stecker 6 angeschlossen sind (Ausschaltstellung). Zur Verbindung der Kabeladern 14,37 wird der Stecker 6, wie es in Fig. 4 dargestellt ist, mit seinem Steckerfuß 5 vollständig in seine Kammer 20 eingesteckt, wobei die Gabelkontakte 9 des Steckers 6 mit den Kontaktfahnen 7 in Kontakt kommen, die auf der Innenseite der Schneidklemm-Kontaktelemente 10 fest angebracht sind, die im Kabelanschaltelement 1 untergebracht sind (Einschaltstellung).

Durch Ziehen eines Steckers 6 wird die Verbindung zwischen einer ankommenden Kabelader 14 und einer abgehenden Kabelader 37 unterbrochen. Durch Einstecken des Steckers 6 in eine andere Kammer 23 kann eine Rangierung der abgehenden Kabeladern 37 durch Anschluß an andere ankommende Kabeladern 14 erfolgen, ohne daß ein Rangierdraht gezogen werden muß und ohne daß eine Kabelader 14,37 aus ihrem Schneidklemm-Kontaktelement 10, 35 herausgelöst werden muß.

### BEZUGSZEICHENLISTE

- 1: Kabelanschaltelement
- 2: Steckeraufnahme
- 3: Magazinaufnahme
- 4: Uberspannungsableitermagazin
- 5: Steckerfuß
- 6: Stecker
- 7: Kontaktfahne
- 8: Kabelführungsbügel
- 9: Gabelkontakt
- 10: Schneidklemm-Kontaktelement
- 11: Anschlußlasche
- 12: Gabelkontakt
- 13: Abgriffkontakt
- 14: ankommende Kabelader
- 15: Lasche
- 16: Raste
- 17: Raststeg
- 18: Kabelführung
- 19: Außenwand
- 20: Kanal
- 21: Mittelwand
- 22: Außenwand
- 23: Kammer
- 24: Querwand
- 25: Steg
- 26: Rastöffnung
- 27: Rastnase
- 28: Gehäuse
- 29: Wippe
- 30: Steg
- 31: Wippentaste
- 32: Wand
- 33: Gehäuseteil
- 34: Gehäuseteil
- 35: Schneidklemm-Kontaktelement
- 36: Klemmrippe
- 37: abgeh. Kabelader
- 38: Streifen
- 39 40: Rastnoppe
- 41: Rastöffnung

## Patentansprüche

1. Anschlußleiste für die Fernmelde- und Datentechnik, aus einem mit Schneidklemm-Kontaktelementen zum Anschluß ankommender Kabeladern versehenen Kabelanschaltelement und aus einem auf dieses aufrastbaren Anschlußelement zur Verbindung der ankommenden Kabeladern mit den abgehenden Kabeladern, wobei die Schneidklemm-Kontaktelemente des Kabelanschaltelementes Kontaktfahnen aufweisen, auf welche Gabelkontakte des Anschlußelementes aufsteckbar sind,
**dadurch gekennzeichnet,**
daß das Anschlußelement als Steckeraufnahme (2) mit bodenseitig offenen Kammern (23) und in diese einsteckbaren, mit den abgehenden Kabeladern (37) verbundenen Steckern (6) ausgebildet ist und daß die Gabelkontakte (9) an den Steckern (6) angeordnet sind.

2. Anschlußleiste nach Anspruch 1, dadurch gekennzeichnet, daß die Steckeraufnahme (2) auf der Innenseite parallel zu der Reihe von Kammern (23) einen U-förmigen Kanal (20) zum Aufstecken auf die Reihe von Schneidklemm-Kontaktelementen (10) des Kabelanschaltelementes (1) aufweist.

3. Anschlußleiste nach Anspruch 1 oder 2, dadurch gekennzeichnet, daß an der Stirnseite der Steckeraufnahme (2) mit Rasten (16) versehene Laschen (15) zum Verbinden der Steckeraufnahme (2) mit dem Kabelanschlußelement (1) angeordnet sind.

4. Anschlußleiste nach einem der Ansprüche 1 bis 3, dadurch gekennzeichnet, daß die Steckeraufnahme (2) auf der dem Kanal (20) gegenüberliegenden Außenseite einen durchgehenden Steg (20) mit Rastöffnungen (26) und die Gehäuse der Stecker (6) auf einer Gehäuseseite Rastnasen (27) aufweisen, die bei in die Kammer (23) der Steckeraufnahme (2) eingestecktem Steckerfuß (5) in die Rastöffnungen (26) des Steges (25) der Steckeraufnahme (2) eingreifen.

5. Anschlußleiste nach Anspruch 4, dadurch gekennzeichnet, daß die Rastnasen (27) auf der Innenseite des einen Endes einer am Gehäuse (28) angelenkten Wippe (29) angeordnet sind, die in der Längsmitte über einen Steg (30) mit dem Gehäuse (28) verbunden ist und am anderen Ende eine Wippentaste (31) bildet.

6. Anschlußleiste nach einem der Ansprüche 1 bis 5, dadurch gekennzeichnet, daß der in die Kammer (23) der Steckeraufnahme (2) einsteckbare Steckerfuß (5) auf seiner Rückseite mit einer Rastnoppe (40) und die Kammer (23) der Steckeraufnahme (2) mit einer Rastöffnung (41) zum Eingreifen der Rastnoppe (40) bei nur teilweise eingestecktem Steckerfuß (5) versehen sind.

7. Anschlußleiste nach einem der Ansprüche 1 bis 6, dadurch gekennzeichnet, daß im aus zwei Gehäuseteilen (33,34) gebildeten Gehäuse (28) der Stecker (6) Schneidklemm-Kontaktelemente (35) und Klemmrippen (36) zum Anschluß und zum Festlegen der abgehenden Kabeladern (37) angeordnet sind.

8. Anschlußleiste nach einem der Ansprüche 1 bis 7, dadurch gekennzeichnet, daß die Schneidklemm-Kontaktelemente (35) mittels elektrisch leitender metallischer Streifen (36) mit den Gabelkontakten (36) verbunden und einstückig mit den Gabelkontakten (36) ausgebildet sind.

## Claims

1. Terminal block for telecommunications and data technology, comprising a cable connection element, which is provided with insulation-piercing terminal contact elements for the connection of incoming cable conductors, and a connecting element, which can be latched onto the cable connection element, for connecting the incoming cable conductors to the outgoing cable conductors, the insulation-piercing terminal contact elements of the cable connection element having contact tabs onto which fork contacts of the connecting element can be plugged, characterized in that the connecting element is designed as a plug holder (2) having chambers (23) which are open at the bottom and having plugs (6) which can be inserted into these chambers (23) and are connected to the outgoing cable conductors (37), and in that the fork contacts (9) are arranged on the plugs (6).

2. Terminal block according to Claim 1, characterized in that, on the inside and parallel to the row of chambers (23), the plug holder (2) has a U-shaped channel (20) for plugging onto the row of insulation-piercing terminal contact elements (10) of the cable connection element (1).

3. Terminal block according to Claim 1 or 2, characterized in that lugs (15) which are provided with catches (16) are arranged on the end face of the plug holder (2) in order to connect the plug holder (2) to the cable connecting element (1).

4. Terminal block according to one of Claims 1 to 3, characterized in that, on the outside opposite the channel (20), the plug holder (2) has a continuous web (20) with latching openings (26), and the housings of the plugs (6) have latching tabs (27) on one housing side, which latching tabs (27) engage in the latching openings (26) in the web (25) of the plug holder (2) when the plug foot (5) is being inserted into the chamber (23) in the plug holder (2).

5. Terminal block according to Claim 4, characterized in that the latching tabs (27) are arranged on the inside of one end of a rocker (29) which is hinged on the housing (28), is connected longitudinally in the centre via a web (30) to the housing (28) and, at the other end, forms a rocker key (31).

6. Terminal block according to one of Claims 1 to 5, characterized in that the plug foot (5) which can be inserted into the chamber (23) in the plug holder (2) is provided on its rear side with a latching projection (40), and the chamber (23) in the plug holder (2) is provided with a latching opening (41) for the latching projection (40) to engage in when the plug foot (5) is only partially inserted.

7. Terminal block according to one of Claims 1 to 6, characterized in that insulation-piercing terminal contact elements (35) and terminal ribs (36) for connection and for fixing of the outgoing cable conductors (37) are arranged in the housing (28) of the plug (6), which is formed from two housing parts (33, 34).

8. Terminal block according to one of Claims 1 to 7, characterized in that the insulation-piercing terminal contact elements (35) are connected by means of electrically conductive metallic strips (36) to the fork contacts (36), and are formed integrally with the fork contacts (36).

## Revendications

1. Plaque à bornes pour la technique des télécommunications et des données constituée d'un élément de connexion par câble muni d'éléments de contact autodénudants pour la connexion de conducteurs de câble d'entrée et d'un élément de connexion enclenchable sur cet élément de connexion pour relier les conducteurs de câble d'entrée aux conducteurs de câble de sortie, les éléments de contact autodénudants de l'élément de connexion par câble présentant des cosses de contact, sur lesquelles des contacts jumelés de l'élément de connexion sont enfichables, caractérisée en ce que l'élément de connexion est conçu comme support de fiche (2) présentant des chambres ouvertes du côté du sol (23) et des fiches (6) enfichables dans celles-ci reliées aux conducteurs de câble de sortie (37) et en ce que les contacts jumelés (9) sont disposés sur les fiches (6).

2. Plaque à bornes suivant la revendication 1, caractérisée en ce que le support de fiche (2) présente, sur le côté intérieur, parallèlement à la rangée de chambres (23), un canal en forme de U (20) pour s'enficher sur la rangée d'éléments de contact autodénudants (10) de l'élément de connexion par câble (1).

3. Plaque à bornes suivant la revendication 1 ou 2, caractérisée en ce que, à l'avant du support de fiche (2), des barres de liaison (15) munies d'encoches (16) sont disposées pour relier le support de fiche (2) à l'élément de connexion par câble (1).

4. Plaque à bornes suivant l'une des revendications 1 à 3, caractérisée en ce que, sur le côté extérieur face au canal (20), le support de fiche (2) présente une barrette traversante (20) présentant des ouvertures à encoche (26) et en ce que les enveloppes des fiches (6) présentent, sur un côté de l'enveloppe, des cames à encoche (27), qui viennent en prise dans les ouvertures à encoche (26) de la barrette traversante (25) du support de fiche (2) lorsque le pied de fiche (5) est enfiché dans la chambre (23) du support de fiche (2).

5. Plaque à bornes suivant la revendication 4, caractérisée en ce que les cames à encoche (27) sont disposées sur le côté intérieur d'une extrémité d'une touche à bascule articulée (29) sur l'enveloppe (28), qui est reliée à l'enveloppe (28) au centre de la longueur par une barrette (30), et forme à l'autre extrémité une touche à bascule (31).

6. Plaque à bornes suivant l'une des revendications 1 à 5, caractérisée en ce que le pied de la fiche (5) enfichable dans la chambre (23) du support de fiche (2) est muni sur son côté arrière d'une noppe à encoche (40), et en ce que la chambre (23) du support de fiche (2) est munie d'une ouverture à encoche (41) pour la prise de la noppe à encoche (40) lorsque le pied de la fiche (5) est seulement partiellement enfiché.

7. Plaque à bornes suivant l'une des revendications 1 à 6, caractérisée en ce que, dans l'enveloppe (28) des fiches (6) composée de deux parties d'enveloppe (33,34), sont disposés des éléments de contact autodénudants (35) et des nervures de blocage (36) pour la connexion et la fixation des conducteurs de câble de sortie (37).

8. Plaque à bornes suivant l'une des revendications 1 à 7, caractérisée en ce que les éléments de contact autodénudants (35) sont reliés aux contacts jumelés (36) au moyen de bandes métalliques conductrices de l'électricité (36) et sont conçus d'un seul tenant avec les contacts jumelés (36).
